# FASCICULE DE BREVET EUROPEEN

(11) **EP 0 711 652 B1**
(45) Date de publication et mention de la délivrance du brevet: **24.03.1999**
(21) Numéro de dépôt: 95402362.8
(22) Date de dépôt: 24.10.1995
(51) Int. Cl.: B29D 24/00, B29C 35/02

(54) **Procédé pour la réalisation de panneaux composites de type sandwich et panneaux ainsi obtenus**
Verfahren zur Herstellung schichtartiger Verbundwerkstoffplatten und so hergestellte Platten
Process for obtaining composite panels of the sandwich type and panels so obtained

(30) Priorité: 09.11.1994 FR 9413458
(43) Date de publication de la demande: 15.05.1996
(73) Titulaire: EUROCOPTER, F-13725 Marignane Cédex (FR)
(72) Inventeur: Boi, Claude, F-13320 Bouc Bel Air (FR)
(74) Mandataire: Bonnetat, Christian

(56) Documents cités:
- EP-A- 0 311 931
- WO-A-89/03761
- DE-A- 3 419 292
- DE-A- 3 444 321
- FR-A- 2 606 703
- FR-A- 2 658 116
- US-A- 3 879 245

## Description

La présente invention concerne un procédé pour la réalisation de panneaux composites de type sandwich, ainsi que les panneaux composites sandwich obtenus par la mise en oeuvre dudit procédé.

On sait que les panneaux composites de type sandwich sont constitués d'une âme alvéolaire épaisse (par exemple du type nid d'abeilles) solidaire de deux peaux externes, formées de fibres imprégnées de résine polymérisée et disposées de part et d'autre de ladite âme alvéolaire. On sait de plus que de tels panneaux sont de plus en plus fréquemment utilisés, notamment à cause de leur grande rigidité et de leur inertie importante, pour réaliser des éléments structuraux, par exemple destinés à des aéronefs.

L'âme alvéolaire de ces panneaux peut être métallique ou organique, avec alvéoles en nid d'abeilles à section carrée ou hexagonale. Une telle âme alvéolaire présente une grande résistance à la compression dans une direction orthogonale à son plan, mais résiste peu à une compression parallèle à son plan. Quant à elles, lesdites peaux peuvent être formées chacune à partir de nappes comportant plusieurs couches superposées et constituées de fibres imprégnées de résine thermodurcissable. Les fibres constituant ces nappes peuvent être tissées ou non tissées et elles sont orientées selon des directions choisies en fonction des caractéristiques mécaniques que l'on désire pour les panneaux. De telles fibres peuvent être en carbone, en verre, en kevlar (marque déposée), etc ..., selon l'application envisagée.

Pour fabriquer de tels panneaux composites sandwich, on place l'âme alvéolaire et les nappes qui recouvrent ses faces à l'intérieur d'un autoclave ou dispositif analogue, dans lequel on soumet l'ébauche de panneau, constituée de ladite âme et desdites nappes, à un cycle de polymérisation à chaud et sous pression. La pression est par exemple obtenue en plaçant ladite ébauche de panneau dans une enveloppe étanche ou sac à vide dans laquelle on crée un vide partiel (quelques dixièmes de bar) et en appliquant une certaine pression à l'extérieur de cette enveloppe étanche (quelques bars).

Sur les bordures du panneau, les nappes recouvrant les deux faces de l'âme et le chant de ladite âme alvéolaire se prolongent au-delà du bord périphérique de ladite âme et elles sont solidarisées l'une de l'autre lors de la polymérisation, de façon à créer une bordure périphérique. Une telle bordure périphérique permet de fixer le panneau sur un cadre porteur ou sur un autre panneau par un moyen de fixation quelconque tel que des boulons, des rivets ou de la colle.

Lorsque l'ébauche de panneau est mise sous pression au cours de la polymérisation, la périphérie de ladite âme alvéolaire constitue une zone critique en ce qui concerne l'adhérence correcte des peaux sur cette âme. En effet, l'effort dû à la pression exercée sur l'ébauche comprend dans cette zone une composante latérale, orientée vers l'intérieur parallèlement aux faces du panneau, à laquelle l'âme alvéolaire n'oppose pas une contre-pression suffisante, compte tenu de sa faible résistance à la compression dans cette direction. Par conséquent, l'âme alvéolaire tend à se déformer localement à sa périphérie, de sorte qu'une liaison satisfaisante entre les peaux et cette âme ne peut pas être obtenue, une telle déformation étant d'autant plus grande que les mailles des alvéoles de ladite âme sont plus importantes.

On a déjà tenté de remédier à cet inconvénient.

Par exemple, on a déjà pensé à déposer une pellicule de colle intumescente sur la tranche de l'âme alvéolaire. Ainsi, lors de la polymérisation à chaud, la colle intumescente augmente de volume et vient remplir les alvéoles. Afin d'éviter qu'une déformation n'intervienne avant que ce produit ne devienne suffisamment rigide, un système de règles est disposé latéralement sur toute la périphérie du panneau et sert à transmettre la pression aux bords du panneau lors de la polymérisation. Un tel procédé connu de raidissement des bordures conduit à une augmentation notable du poids des panneaux en matériau composite, puisque le poids du produit intumescent est d'environ 80 grammes par mètre linéaire. De plus, la nécessité d'utiliser un système de règles conduit à disposer d'un outillage compliqué et à un temps de fabrication relativement long, et par conséquent, à un surcoût qui se trouve encore accentué par les difficultés à automatiser ce procédé pour le rendre industriel.

Quant à lui, le brevet EP-A-0 311 931 décrit un procédé consistant à disposer à la périphérie de l'âme en nid d'abeilles un cadre en nid d'abeilles, dont les alvéoles sont disposés selon une direction inclinée par rapport au plan du panneau et à découper ce cadre en biseau, de façon à former un bord périphérique sensiblement normal à cette direction inclinée. Un tel procédé permet d'obtenir un panneau dont le bord est renforcé sans aucune augmentation de poids, mais le temps de fabrication reste relativement élevé, de même que le coût du panneau, et une fabrication automatisée est difficile à mettre en oeuvre.

Par ailleurs, le brevet FR-A-2 658 116 décrit un procédé consistant à découper en biseau le bord de ladite âme alvéolaire, à déposer un film de colle thermofusible sur le bord ainsi découpé, à chauffer ce film de colle de façon à liquéfier cette dernière et à provoquer son dépôt par capillarité sur les parois de ladite âme adjacentes au bord découpé, puis à refroidir la colle thermofusible de façon à rigidifier cette dernière et à raidir les parois de l'âme adjacentes au bord découpé.

Ce dernier procédé permet de renforcer suffisamment le bord de ladite âme pour que cette dernière puisse supporter la pression appliquée lors de la polymérisation, sans augmenter le poids de façon trop pénalisante et pour un temps de fabrication sensiblement plus court que celui des autres procédés connus, de sorte qu'il en résulte une réduction significative du coût de fabrication et des taux de rebut, ce procédé pouvant en outre être automatisé dans le cadre d'une fabrication industrielle des panneaux. Cependant, un tel procédé nécessite que le bord de l'âme soit taillé en biseau, l'angle dudit biseau étant de préférence compris entre 25° et 40°.

La présente invention a pour objet de remédier aux inconvénients des procédés connus rappelés ci-dessus, et elle concerne un procédé qui, par rapport à ces procédés connus, présente des avantages certains, tels que gain de masse et de temps de fabrication, augmentation de la résistance mécanique, amélioration de l'aspect du produit fini, mise en oeuvre facile (que le bord de l'âme comporte ou non un biseau et quel que soit l'angle de l'éventuel biseau) et possibilité d'extension à la réalisation de panneaux conformés à des formes complexes.

A cette fin, selon l'invention, le procédé pour la réalisation d'un panneau composite sandwich constitué d'au moins une âme alvéolaire portant sur ses faces des peaux de matière composite fibres-résine qui en sont solidaires, procédé selon lequel :
- on donne au chant périphérique de ladite âme alvéolaire un profil désiré ;
- on forme une ébauche de panneau composite sandwich en recouvrant les faces de ladite âme alvéolaire de nappes souples de fibres imprégnées d'une première résine thermodurcissable, lesdites nappes souples se prolongeant au-delà dudit chant périphérique de ladite âme alvéolaire et étant rapprochées l'une de l'autre pour qu'au moins l'une d'elles soit au contact dudit chant périphérique et pour que, au-delà dudit chant, elles soient superposées en formant une bride périphérique saillante ;
- après quoi, on soumet ladite ébauche de panneau composite sandwich à un cycle de polymérisation de ladite première résine thermodurcissable, afin de solidariser lesdites nappes sur ladite âme alvéolaire et de les durcir pour qu'elles forment lesdites peaux, ledit cycle de polymérisation consistant en une élévation de température avec une mise sous pression,
   est remarquable :
- en ce que, dans une feuille souple d'une matière composite constituée de fibres imprégnées d'une seconde résine thermodurcissable, on forme au moins une règle dont le profil correspond à celui du chant périphérique de ladite ébauche et qui comporte deux ailes externes reliées par une aile intermédiaire ;
- en ce que, avant application dudit cycle de polymérisation, on met en place ladite règle sur la bordure de ladite ébauche, de façon que, simultanément, lesdites ailes externes soient respectivement appliquées contre une face de ladite ébauche et contre ladite bride, tandis que ladite aile intermédiaire est appliquée contre le chant de ladite ébauche ;
- en ce qu'on choisit lesdites première et seconde résines thermodurcissables pour que, lors d'une élévation de température, le durcissement de ladite seconde résine se produise avant celui de ladite première résine ; et
- en ce que l'on soumet ladite ébauche, pourvue d'au moins une telle règle en bordure, seulement à une élévation de température sans mise sous pression jusqu'à durcissement de ladite seconde résine, puis, après durcissement de ladite seconde résine et avant durcissement de la première résine, à la continuation de ladite élévation de température et à la mise sous pression, l'application de la température et de la pression étant poursuivie jusqu'à durcissement total de ladite première résine.

Ainsi, grâce à la présente invention, la règle, initialement souple, se rigidifie avant le durcissement de ladite ébauche, de sorte que ladite règle peut servir de forme à la bordure périphérique de l'ébauche.

De préférence, afin que les différents éléments souples soient rigoureusement appliqués les uns contre les autres avant durcissement de ladite règle et de ladite ébauche, celle-ci est mise en légère dépression (par exemple -0,7 bar) pendant l'élévation de température sans mise sous pression.

De façon connue, ladite élévation de pression peut comporter un palier temporel pendant lequel la température est maintenue constante à une valeur particulière. Dans ce dernier cas, il est avantageux que le durcissement de ladite seconde résine imprégnant la règle commence et se termine respectivement au voisinage du début et au voisinage de la fin dudit palier, tandis que le durcissement de ladite première résine imprégnant les nappes ne commence qu'au voisinage de la fin dudit palier.

On pourrait envisager d'utiliser ladite règle durcie comme bordure rapportée, solidaire de ladite ébauche.

Cependant, afin notamment d'éviter un excédent de masse, il est préférable que ladite règle soit éliminée après avoir servi de forme à la bordure périphérique de l'ébauche. Dans ce cas, pour éviter que ladite règle durcie n'adhère à l'ébauche, on dispose au moins un film d'une matière antiadhérente entre l'ébauche et ladite règle, avant application du traitement thermique. De tels films de matière antiadhérente facilitent l'opération de démoulage, tout en assurant de plus un drainage de l'air et des solvants (par succion sous l'effet de la dépression) dégagés par les matériaux composites lors de la phase de polymérisation.

Le profil donné au chant périphérique de l'âme alvéolaire peut présenter toute forme désirée. Par exemple, comme cela est usuel, cette forme peut consister en un biseau unique. En variante, on pourrait par exemple conformer ledit chant pour qu'il comporte deux faces inclinées opposées, respectivement reliées aux faces de l'âme alvéolaire et se coupant suivant une arête commune. De telles faces inclinées peuvent être symétriques de façon que ladite arête commune se trouve dans le plan médian de ladite âme alvéolaire, passant par le milieu de l'épaisseur de celle-ci. On utilise alors deux règles semblables à celles décrites ci-dessus, chacune d'elles étant associée à l'une desdites faces inclinées.

L'aile externe de ladite règle, destinée à s'appliquer sur une face de l'ébauche, peut être courte et s'appliquer uniquement sur la partie périphérique de ladite face de l'ébauche, voisine du chant.

Cependant, une telle aile externe peut être suffisamment large pour recouvrir au moins la plus grande partie de ladite face, de sorte que la règle présente alors au moins approximativement la forme d'une coquille.

Ladite coquille peut alors être utilisée comme contre-forme pour une forme, éventuellement complexe, dont la surface est épousée par ladite ébauche de panneau composite sandwich.

Bien entendu, la présente invention concerne de plus un panneau composite sandwich obtenu par la mise en oeuvre du procédé décrit ci-dessus.

Les figures du dessin annexé feront bien comprendre comment l'invention peut être réalisée. Sur ces figures, des références identiques désignent des éléments semblables.

La figure 1 montre schématiquement un exemple de réalisation d'un panneau composite sandwich conformément à la présente invention.

Les figures 2a, 2b, 2c et 2d sont des diagrammes illustrant schématiquement le processus de réalisation du panneau de la figure 1 :

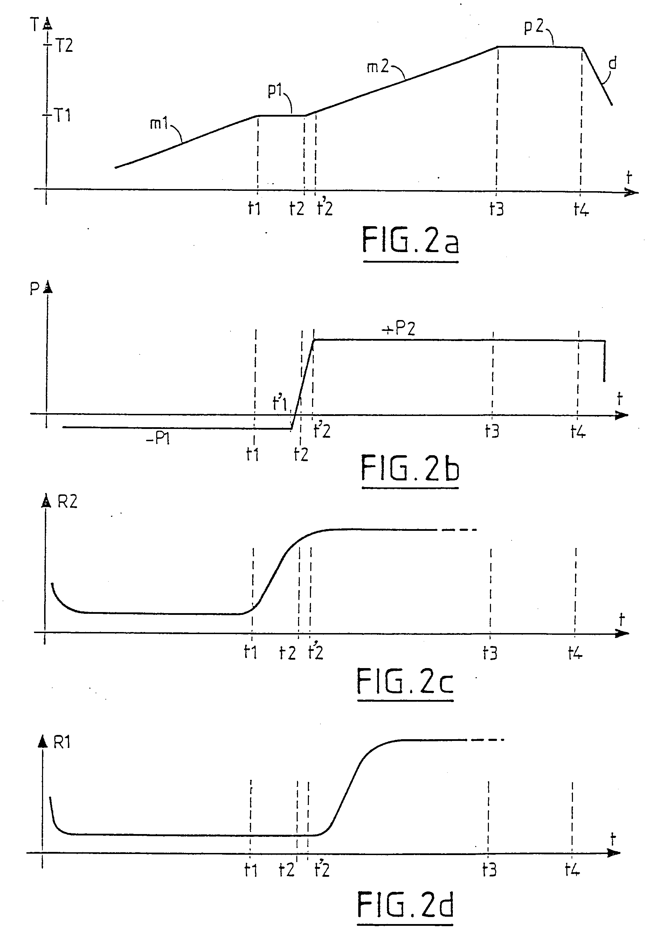

- la figure 2a représente, en fonction du temps t, la variation de température T imposée à l'ébauche du panneau composite sandwich ;
- la figure 2b représente, en fonction du temps t, la variation de pression P imposée à l'ébauche du panneau composite sandwich ;
- la figure 2c représente, en fonction du temps t, la variation de la rigidité R2 de la seconde résine imprégnant la règle mise en oeuvre selon l'invention ;
- la figure 2d représente, en fonction du temps t, la variation de la rigidité R1 de la première résine imprégnant les peaux de l'ébauche du panneau composite sandwich.

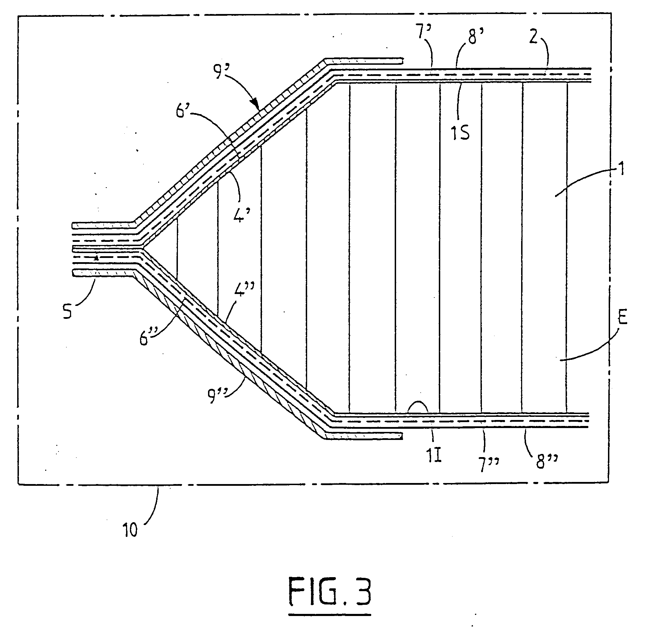

Les figures 3 et 4 illustrent des variantes de réalisation du panneau composite sandwich conforme à la présente invention.

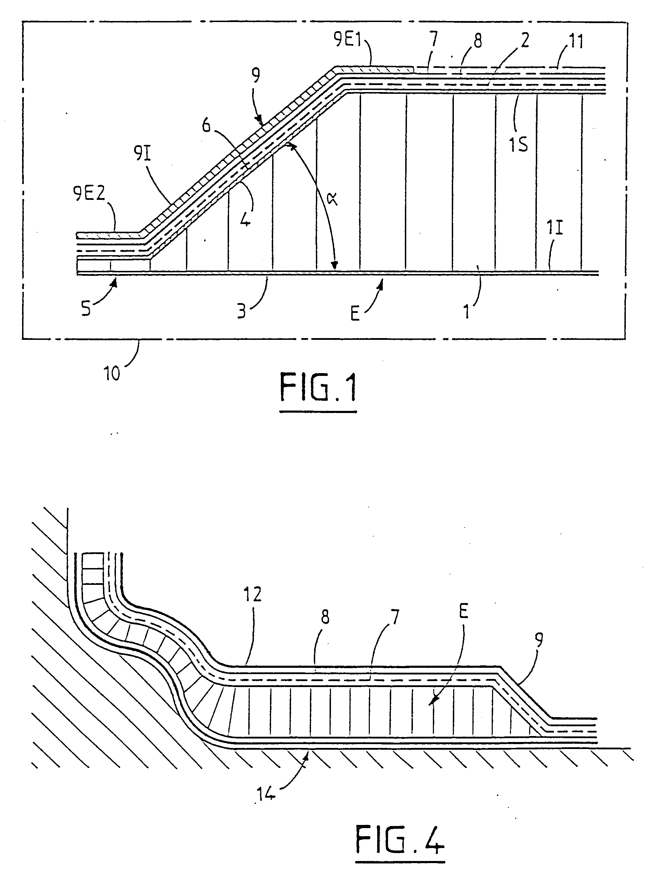

Sur les figures 1, 3 et 4, les différents éléments superposés et normalement appliqués les uns contre les autres ont été représentés légèrement écartés les uns des autres, à des fins de clarté.

L'ébauche E de panneau composite sandwich selon l'invention, montrée schématiquement et partiellement sur la figure 1, comporte une âme alvéolaire 1, dont les faces supérieure et inférieure 1S et 1I sont respectivement recouvertes de nappes souples 2 et 3 formées de fibres imprégnées d'une première résine thermodurcissable, par exemple la résine époxy connue commercialement sous la référence 145.7.

Dans l'exemple représenté, le bord périphérique de l'âme alvéolaire 1 est taillé en biseau, de sorte que le chant périphérique 4 de ladite âme est formé par un tel biseau. Comme on le déduira aisément de ce qui suit, l'angle α formé par ledit chant 4 avec les faces 1S et 1I peut être quelconque.

Comme on peut le voir sur la figure 1, la nappe 2 est également appliquée contre le chant 4 et les deux nappes 2 et 3, ainsi rapprochées l'une de l'autre, se prolongent, vers l'extérieur, au-delà du chant périphérique 4, en étant superposées pour former une bride saillante 5.

Ainsi, l'ébauche E est formée de l'âme alvéolaire 1 et des nappes 2 et 3 et son chant 6 est formé par la partie de la nappe 2 recouvrant le chant 4 de l'âme alvéolaire 1. La mise en place des nappes 2 et 3 sur l'âme 1 s'effectue par exemple par drapage.

Comme illustré sur la figure 1, on dispose, sur la bride 5, le chant 6 et la nappe 2, deux couches antiadhérentes superposées 7 et 8 de produit pelable, tel qu'un film de polyester, ou de film séparateur perforé.

De plus, sur les couches 7 et 8, au moins au voisinage du chant 6 de l'ébauche E, on dispose une règle souple 9 réalisée dans une matière composite en feuille, constituée de fibres imprégnées d'une seconde résine thermodurcissable, par exemple la résine époxy connue commercialement sous la référence M10. La règle souple 9 présente un profil correspondant au chant 6 et elle comporte :
- une aile externe 9E1 destinée à s'appliquer, par l'intermédiaire des couches 7 et 8, sur la partie de la nappe 2, recouvrant la face supérieure 15 de l'ébauche 1, au voisinage du chant 6 ;
- une aile intermédiaire 9I, destinée à s'appliquer, par l'intermédiaire des couches 7 et 8, sur le chant 6 de l'ébauche E ; et
- une autre aile externe 9E2, destinée à s'appliquer, par l'intermédiaire des couches 7 et 8, sur la bride 5.

Lorsque l'ébauche E est terminée et est recouverte des couches 7 et 8 et de la règle 9, l'ensemble E, 7, 8 et 9 est placé à l'intérieur d'une enceinte 10 (représentée schématiquement par un cadre en traits mixtes) et est soumis au cycle de polymérisation illustré par les figures 2a et 2b.

Dans l'enceinte 10, on commence par effectuer une montée en température m1 lente, par exemple de 0,3°C par minute, jusqu'à atteindre une température T1 à l'instant t1. Puis, la température T1 est maintenue constante pendant un palier p1, durant jusqu'à l'instant t2. A partir de l'instant t2, on procède à une autre montée en température m2, jusqu'à atteindre une température T2 à l'instant t3. La température T2 est maintenue constante pendant un autre palier p2, durant jusqu'à l'instant t4. A partir de l'instant t4, la température est commandée à la baisse, selon la descente d.

En ce qui concerne la pression P, elle est maintenue à un palier négatif de valeur -P1 jusqu'à un instant t'1 proche de t2, où elle est commandée (par exemple gradient de 0,1 bar/mn) pour croître jusqu'à une valeur positive +P2, qu'elle atteint à un instant t'2 voisin de t2 et qu'elle conserve jusqu'à après l'instant t4.

Les profils généraux des variations de température et de pression, tels qu'illustrés par les diagrammes des figures 2a et 2b, sont connus et expliqués par exemple dans le document FR-A-2 658 116 mentionné ci-dessus.

Si l'on examine les diagrammes des figures 2c et 2d, on voit que, pendant la montée en température m1, les première et seconde résines thermodurcissables imprégnant respectivement les nappes 2 et 3, d'une part, et la règle 9, d'autre part, deviennent souples et même éventuellement liquides. De plus, ces diagrammes montrent que la seconde résine thermodurcissable imprégnant la règle 9 commence à durcir au voisinage de l'instant t1 auquel débute le palier p1 et a atteint sa dureté maximale au voisinage des instants t2 et t'2, tandis que la première résine thermodurcissable imprégnant les nappes 2 et 3 commence à durcir après les instants t2 et t'2.

De ce qui précède, on peut remarquer que :
- le palier de dépression -P1 se produit alors que lesdites première et seconde résines sont molles, de sorte que ce palier de dépression a pour effet d'assurer un excellent contact entre les éléments 1, 2, 3, 7, 8 et 9 en présence, et notamment de permettre à la règle 9 d'épouser la forme exacte du chant 6 de l'ébauche E ;
- la seconde résine imprégnant la règle 9 commence à se gélifier à la température T1, à l'instant t1 auquel débute le palier p1, et elle atteint sa rigidité maximale à la fin dudit palier p1. Celui-ci constitue, en quelque sorte, un palier de mise en oeuvre de la règle 9 adaptée au chant 6. A la fin du palier p1, la règle 9 est rigide et elle peut être soumise à la pression P2, sans se déformer ;
- à la fin du palier p1, la première résine imprégnant les nappes 2 et 3 est en phase de gélification, alors que la règle 9 est déjà durcie. Par suite, pendant la montée en température m2, l'application de la pression peut être exercée sur la règle durcie sans soulever de difficultés pour la stabilité des formes. Durant la montée en température m2, l'ébauche E se rigidifie et se conforme parfaitement à la règle 9 dans la zone de son chant 6, sans déformation dudit chant et donc sans défauts d'adhérence entre les peaux 2 et 3 et l'âme alvéolaire 1.

Dans l'exemple de réalisation de la figure 1, le chant 4 de l'âme alvéolaire 1, et donc également le chant 6 de l'ébauche E, est conformé en un biseau unique reliant les faces 1S et 1I, de sorte que la bride 5 se trouve en prolongement de la nappe 3.

Le profil des chants 4 et 6 pourrait présenter toute forme désirée. A titre d'exemple, sur la figure 3, on a illustré un chant comportant deux biseaux ou faces convergentes et symétriques, 4' et 4''. Bien entendu, dans ce cas, on utilise des films de matière antiadhérente 7', 7'', 8', 8'' et des règles 9', 9'', respectivement analogues aux films 7 et 8 et à la règle 9, pour procéder au durcissement des chants 6' et 6''. L'avantage du mode de réalisation représenté sur la figure 3 consiste en ce que la bride 5 se trouve dans le plan médian de l'ébauche E, parallèle aux faces 1S et 1I. Eventuellement, les deux règles 9' et 9'' pourraient être solidaires l'une de l'autre par leurs ailes 9E2 pour former un profilé unique.

Sur les figures 1 et 3, l'aile externe 9E1 des règles 9, 9', 9'' est courte et juste suffisante pour s'appuyer sur la partie périphérique de la nappe 2 voisine du chant 6, 6', 6''.

Bien entendu, comme cela est illustré en pointillés sur la figure 1, ladite aile 9E1 pourrait comporter un prolongement 11 s'appliquant largement sur la nappe 2. Dans ce cas, la règle 9 peut devenir une sorte de coquille enveloppant l'ébauche E. Sur la figure 4, on a représenté une telle coquille 12 servant de contre-forme à une forme complexe 14 sur laquelle est disposée l'ébauche E.

Il est alors possible d'obtenir des panneaux composites sandwich qui, au lieu d'être plans, présentent des formes incurvées complexes.

Ainsi, grâce à la présente invention, il n'est plus nécessaire d'utiliser des films de colle de stabilisation entre l'âme alvéolaire et les peaux, comme cela est prévu dans une partie de la technique antérieure rappelée ci-dessus. Il en résulte des avantages importants :
- liaison de l'âme alvéolaire et des peaux par la première résine, époxy thermodurcissable par exemple, procurant au panneau des caractéristiques mécaniques améliorées, par rapport à l'utilisation d'une colle : à titre indicatif, la contrainte de cisaillement plan à rupture est de l'ordre de 25 MPa pour une résine époxy et de seulement 10 MPa pour une colle structurale ;
- gain de masse : 30 g/mètre linéaire, par exemple pour un panneau usuel ;
- gain de temps de mise en oeuvre des matériaux et polymérisation en une seule opération contribuant à améliorer le produit fini.

## Revendications

1. Procédé pour la réalisation d'un panneau composite sandwich constitué d'au moins une âme alvéolaire (1) portant sur ses faces (1S, 1I) des peaux (2, 3) de matière composite fibres-résine qui en sont solidaires, procédé selon lequel :
- on donne au chant périphérique (4) de ladite âme alvéolaire (1) un profil désiré ;
- on forme une ébauche (E) de panneau composite sandwich en recouvrant les faces (1S, 1I) de ladite âme alvéolaire (1) de nappes souples (2, 3) de fibres imprégnées d'une première résine thermodurcissable, lesdites nappes souples se prolongeant au-delà dudit chant périphérique (4) de ladite âme alvéolaire (1) et étant rapprochées l'une de l'autre pour qu'au moins l'une d'elles soit au contact dudit chant périphérique (4) et pour que, au-delà dudit chant, elles soient superposées en formant une bride périphérique saillante (5) ;
- après quoi, on soumet ladite ébauche (E) de panneau composite sandwich à un cycle de polymérisation de ladite première résine thermodurcissable, afin de solidariser lesdites nappes (2, 3) sur ladite âme alvéolaire et de les durcir pour qu'elles forment lesdites peaux, ledit cycle de polymérisation consistant en une élévation de température avec une mise sous pression,
caractérisé :
- en ce que, dans une feuille souple d'une matière composite constituée de fibres imprégnées d'une seconde résine thermodurcissable, on forme au moins une règle (9) dont le profil correspond à celui du chant périphérique de ladite ébauche et qui comporte deux ailes externes (9E1, 9E2) reliées par une aile intermédiaire (9I) ;
- en ce que, avant application dudit cycle de polymérisation, on met en place ladite règle (9) sur la bordure de ladite ébauche (E), de façon que, simultanément, lesdites ailes externes (9E1, 9E2) soient respectivement appliquées contre une face de ladite ébauche et contre ladite bride (5), tandis que ladite aile intermédiaire (9I) est appliquée contre le chant (6) de ladite ébauche (E) ;
- en ce qu'on choisit lesdites première et seconde résines thermodurcissables pour que, lors d'une élévation de température, le durcissement de ladite seconde résine se produise avant celui de ladite première résine ; et
- en ce que l'on soumet ladite ébauche (E), pourvue d'au moins une telle règle (9) en bordure, seulement à une élévation de température sans mise sous pression jusqu'à durcissement de ladite seconde résine, puis, après durcissement de ladite seconde résine et avant durcissement de la première résine, à la continuation de ladite élévation de température et à la mise sous pression, l'application de la température et de la pression étant poursuivie jusqu'à durcissement total de ladite première résine.

2. Procédé selon la revendication 1,
caractérisé en ce que ladite ébauche (E) est mise en dépression pendant l'élévation de température sans mise sous pression.

3. Procédé selon l'une des revendications 1 ou 2, selon lequel dans ladite élévation de température est intercalé un palier temporel (p1) pendant lequel la température est maintenue constante à une valeur particulière (T1),
caractérisé :
- en ce que le durcissement de ladite seconde résine imprégnant ladite règle (9) commence et se termine respectivement au voisinage du début et au voisinage de la fin dudit palier (p1) ; et
- en ce que le durcissement de ladite première résine imprégnant lesdites nappes (2, 3) ne commence qu'au voisinage de la fin dudit palier (p1).

4. Procédé selon l'une des revendications 1 à 3,
caractérisé en ce qu'on dispose au moins un film d'une matière antiadhérente entre ladite ébauche (E) et ladite règle (9).

5. Procédé selon l'une quelconque des revendications 1 à 4,
caractérisé en ce que ledit chant périphérique (4) de l'âme alvéolaire (1) est taillé en biseau.

6. Procédé selon l'une quelconque des revendications 1 à 4,
caractérisé en ce que ledit chant périphérique (4) de l'âme alvéolaire (1) comporte deux faces inclinées opposées.

7. Procédé selon l'une quelconque des revendications 1 à 6,
caractérisé en ce que l'aile externe (9E1) de ladite règle (9), appliquée sur une face de ladite ébauche (E), recouvre au moins la plus grande partie de ladite face, de sorte que ladite règle présente au moins approximativement la forme d'une coquille.

8. Procédé selon la revendication 7,
caractérisé en ce que ladite coquille constitue une contre-forme pour une forme sur laquelle est conformé ledit panneau composite.

## Claims

1. A process for producing a sandwich composite panel consisting of at least one cellular core (1) having on its faces (1S, 1I) skins (2, 3) of fiber/resin composite material which are fastened to it, according to which process:
- the peripheral flank (4) of said cellular core (1) is given a desired profile;
- a sandwich composite panel preform (E) is formed by covering the faces (1S, 1I) of said cellular core (1) with flexible plies (2, 3) of fibers impregnated with a first thermosetting resin, said flexible plies extending beyond said peripheral flank (4) of said cellular core (1) and being brought together so that at least one of them is in contact with said peripheral flank (4) and so that, beyond said flank, they are superposed in order to form a projecting peripheral flange (5);
- thereafter, said sandwich composite panel preform (E) is subjected to a cycle for polymerizing said first thermosetting resin, so as to fasten said plies (2, 3) to said cellular core and to cure them so that they form said skins, said polymerization cycle consisting of a temperature rise with pressure being applied,
characterized in that
- at least one strip (9) is formed from a flexible sheet of a composite material consisting of fibers impregnated with a second thermosetting resin, the profile of which strip corresponds to that of the peripheral flank of said preform and which includes two external portions (9E1, 9E2) connected by an intermediate portion (9I);
- in that, before application of said polymerization cycle, said strip (9) is put into place on the border of said preform (E) so that, simultaneously, said external portions (9E1, 9E2) are respectively applied against one face of said preform and against said flange (5), while said intermediate portion (95) is applied against the flank (6) of said preform (E);
- in that said first and second thermosetting resins are chosen so that, during a temperature rise, the curing of said second resin occurs before that of said first resin; and
- in that said preform (E), provided with at least one such strip (9) on the border, is subjected just to a temperature rise, without pressure being applied, until said second resin has cured and then, after the curing of said second resin and before the curing of the first resin, is subjected to the continuation of said temperature rise, with pressure being applied, the application of temperature and pressure being continued until said first resin has fully cured.

2. The process as claimed in claim 1, characterized in that said preform (E) is subjected to a reduction in pressure during the temperature rise without pressure being applied.

3. The process as claimed in either of claims 1 and 2, according to which, a hold period (p1), during which the temperature is held constant at a particular value (T1), is inserted into said temperature rise, characterized in that
- the curing of said second resin impregnating said strip (9) starts and finishes respectively near the start and near the end of said hold period (p1); and
- in that the curing of said first resin impregnating said plies (2, 3) only starts near the end of said hold period (p1).

4. The process as claimed in one of claims 1 to 3, characterized in that at least one film of a nonstick material is arranged between said preform (E) and said strip (9).

5. The process as claimed in any one of claims 1 to 4, characterized in that said peripheral flank (4) of the cellular core (1) is cut in a bevel.

6. The process as claimed in any one of claims 1 to 4, characterized in that said peripheral flank (4) of the cellular core (1) has two opposed inclined faces.

7. The process as claimed in any one of claims 1 to 6, characterized in that the external portion (9E1) of said strip (9), applied against one face of said preform (E), covers at least the major part of said face so that said strip has, at least approximately, the shape of a mold.

8. The process as claimed in claim 7, characterized in that said mold constitutes a die block for a forming tool against which said composite panel is shaped.

## Patentansprüche

1. Verfahren zur Herstellung einer schichtartigen Verbundwerkstoffplatte, die aus wenigstens einem zellenartigen Kern (1) besteht, der auf seinen Seiten (1S, 1I) Außenschichten (2, 3) aus Faser/Harz-Verbundwerkstoff trägt, die mit ihm fest verbunden sind, nach welchem Verfahren:
- der Schmalseite (4) am Umfang des zellenartigen Kerns (1) ein gewünschtes Profil gegeben wird;
- ein Rohling (E) der schichtartigen Verbundwerkstoffplatte gebildet wird, indem die Seiten (1S, 1I) des zellenartigen Kerns (1) mit flexiblen Lagen aus mit einem ersten wärmehartbaren Harz imprägnierten Fasern bedeckt werden, wobei sich die flexiblen Lagen über die Schmalseite (4) am Umfang des zellenartigen Kerns (1) hinaus verlängern und einander genähert werden, damit wenigstens eine von ihnen mit der Schmalseite (4) am Umfang in Kontakt ist und damit sie jenseits der Schmalseite übereinanderliegen, wobei sie einen vorstehenden Umfangsflansch (5) bilden;
- wonach der Rohling (E) der schichtartigen Verbundwerkstoffplatte einem Zyklus zur Polymerisation des ersten wärmehärtbaren Harzes unterworfen wird, um die Lagen (2, 3) mit dem zellenartigen Kern fest zu verbinden und sie zu härten, damit sie die Außenschichten bilden, wobei der Polymerisationszyklus in einer Temperaturerhöhung mit einem Unterdrucksetzen besteht,
dadurch gekennzeichnet, daß:
- in einer flexiblen Folie aus einem Verbundwerkstoff, der aus mit einem zweiten wärmehärtbaren Harz imprägnierten Fasern besteht, wenigstens eine Schiene (9) gebildet wird, deren Profil dem der Schmalseite am Umfang des Rohlings entspricht und die zwei durch einen Zwischenflügel (9I) verbundene äußere Flügel (9E1, 9E2) aufweist;
- vor der Anwendung des Polymerisationszyklus die Schiene (9) am Rand des Rohlings (E) so angeordnet wird, daß die äußeren Flügel (9E1, 9E2) gleichzeitig an eine Seite des Rohlings bzw. an den Flansch (5) angelegt werden, während der Zwischenflügel (9I) an die Schmalseite (6) des Rohlings (E) angelegt wird;
- die ersten und zweiten wärmehärtbaren Harze so ausgewählt werden, daß sich bei einer Temperaturerhöhung die Härtung des zweiten Harzes vor der des ersten Harzes zeigt; und
- der Rohling (E), der mit wenigstens einer solchen Schiene (9) am Rand versehen ist, bis zur Härtung des zweiten Harzes nur eine Temperaturerhöhung ohne Unterdrucksetzen, dann nach der Härtung des zweiten Harzes und vor der Härtung des ersten Harzes einer Fortsetzung der Temperaturerhöhung und einem Unterdrucksetzen unterzogen wird, wobei die Anwendung der Temperatur und des Drucks bis zur vollständigen Härtung des ersten Harzes fortgesetzt wird.

2. Verfahren nach Anspruch 1, dadurch gekennzeichnet, daß der Rohling (E) während der Temperaturerhöhung ohne Unterdrucksetzen unter einen Unterdruck gesetzt wird.

3. Verfahren nach einem der Ansprüche 1 oder 2, nach welchem in die Temperaturerhöhung eine zeitliche Phase (p1) eingeschoben ist, während welcher die Temperatur bei einem bestimmten Wert (T1) konstant gehalten wird, dadurch gekennzeichnet, daß
- die Härtung des zweiten Harzes, das die Schiene (9) imprägniert, in der Nähe des Beginns und in der Nähe des Endes der Phase (p1) beginnt bzw. endet; und
- die Härtung des ersten Harzes, das die Lagen (2, 3) imprägniert nur in der Nähe des Endes der Phase (p1) beginnt.

4. Verfahren nach einem der Ansprüche 1 bis 3, dadurch gekennzeichnet, daß zwischen dem Rohling (E) und der Schiene (9) wenigstens ein Film aus einem Antihaftmaterial angeordnet wird.

5. Verfahren nach einem der Ansprüche 1 bis 4, dadurch gekennzeichnet, daß die Schmalseite (4) am Umfang des zellenartigen Kerns (1) zu einer Abschrägung zugeschnitten wird.

6. Verfahren nach einem der Ansprüche 1 bis 4, dadurch gekennzeichnet, daß die Schmalseite (4) am Umfang des zellenartigen Kerns (1) zwei entgegengesetzte, geneigte Seiten aufweist.

7. Verfahren nach einem der Ansprüche 1 bis 6, dadurch gekennzeichnet, daß der äußere Flügel (9E1) der Schiene (9), der an einer Seite des Rohlings (E) anliegt, wenigstens den größten Teil der Seite bedeckt, so daß die Schiene wenigstens annähernd die Form einer Kokille aufweist.

8. Verfahren nach Anspruch 7, dadurch gekennzeichnet, daß die Kokille eine Paßform für eine Form bildet, auf der die Verbundwerkstoffplatte gebildet wird.
